# EUROPÄISCHE PATENTSCHRIFT

(11) **EP 4 124 531 B1**
(45) Veröffentlichungstag und Bekanntmachung des Hinweises auf die Patenterteilung: **12.03.2025**
(21) Anmeldenummer: 22178802.9
(22) Anmeldetag: 14.06.2022
(51) Int. Cl.: B60W 40/09, B60K 35/00, B60K 37/00, B60W 50/14, B60K 35/28, B60K 35/29

(54) **VERFAHREN ZUR KLASSIFIZIERUNG EINES FAHRERS IN EINEM FAHRZEUG**
METHOD FOR CLASSIFYING A DRIVER IN A VEHICLE
PROCÉDÉ DE CLASSEMENT D'UN CONDUCTEUR DANS UN VÉHICULE

(30) Priorität: 27.07.2021 DE 102021208097
(43) Veröffentlichungstag der Anmeldung: 01.02.2023
(73) Patentinhaber: Robert Bosch GmbH, 70442 Stuttgart (DE)
(72) Erfinder: Schumacher, Jan, 53343 Wachtberg (DE); Henzler, Markus, 70197 Stuttgart (DE)

(56) Entgegenhaltungen:
- EP-A1- 3 508 391
- EP-A1- 3 831 678
- DE-A1- 102009 009 975
- DE-A1- 102015 107 668
- DE-A1- 102015 203 727

## Beschreibung

Die Erfindung bezieht sich auf ein Verfahren zur Klassifizierung eines Fahrers in einem Fahrzeug, insbesondere in einem Einspurfahrzeug wie einem Motorrad oder einem Motorroller.

### Stand der Technik

In der EP 3 219 567 A1 wird die Bewertung des Fahrers eines Zweirades auf der Basis von physikalischen Bewegungsmessungen im Zweirad beschrieben. Als Sensorik im Zweirad kommt eine inertiale Messeinheit zum Einsatz, mit der Beschleunigungen und Drehraten ermittelt werden können. Zur Bewertung des Fahrers werden Messreihen analysiert, die einem bestimmten Fahrmanöver entsprechen, wobei die Fahrerbewertung anhand eines charakteristischen Wertes innerhalb der betrachteten Messreihe durchgeführt wird, beispielsweise anhand des Gierwinkels.

EP3508391A1 beschreibt ein Verfahren zur Klassifizierung eines Fahrers in einem Fahrzeug.

### Offenbarung der Erfindung

Das erfindungsgemäße Verfahren ermöglicht die Klassifizierung eines Fahrers in einem Fahrzeug mit hoher Genauigkeit. Das Verfahren bezieht sich vorzugsweise auf ein Einspurfahrzeug wie ein Motorrad oder ein Motorroller. Es kommen aber auch Zweispurfahrzeuge wie Personenkraftwagen oder Lastkraftwagen in Betracht.

Bei dem Verfahren wird während der Fahrt eine vom Fahrer vorgegebene Lenkeingabegröße über einen Mindestzeitraum ermittelt. Aus dem Verlauf der Lenkeingabegröße wird ein Fahrerbewertungssignal bestimmt, das einer Einstufung des Fahrers in eine vorgegebene Fahrerkategorie entspricht.

Die Fahrereinstufung in eine Fahrerkategorie kann anhand des Verlaufs der Lenkeingabegröße, die der Fahrer vorgibt, im Hinblick auf typische Merkmale durchgeführt werden, insbesondere im Hinblick auf eine überlagerte Schwingung im Verlauf der Lenkeingabegröße, deren Frequenz und Amplitude bestimmt werden kann. Die überlagerte Schwingung stellt die Abweichung der tatsächlichen Lenkeingabegröße von einem idealen Verlauf dar.

Dem erfindungsgemäßen Verfahren liegt somit eine Bewertung des Fahrerlenkverhaltens zugrunde. Es handelt sich um eine unmittelbare Eingabegröße, die der Fahrer im Fahrzeug während der Fahrt vorgibt. Die Lenkeingabegröße stellt eine zuverlässige Größe für die Klassifizierung des Fahrers in eine vorgegebene Fahrerkategorie dar. Als Fahrerkategorie werden insbesondere diskrete, vorgegebene Kategorien bestimmt, beispielsweise ein sportlicher Fahrer, ein durchschnittlicher Fahrer und ein vorsichtiger Fahrer. Diese Fahrerkategorien sind anhand typischer Merkmale und Kenngrößen voneinander unterscheidbar, insbesondere im Hinblick auf die Abweichung der vom Fahrer vorgegebenen Lenkeingabegröße von einem idealen bzw. optimalen Verlauf der betreffenden Lenkgröße.

Die Bewertung der Lenkeingabegröße ist unabhängig und getrennt vom Systemübertragungsverhalten des Fahrzeugs. Bei dem erfindungsgemäßen Verfahren lassen sich das Fahrzeugverhalten und die Fahrereingabe in verbesserter Weise separat betrachten, als dies bei ausschließlicher Verwendung von fahrdynamischen Messsignalen wie beispielsweise Fahrzeuglängs- und Fahrzeugquerbeschleunigung oder Gierrate möglich ist.

Gemäß der Erfindung wird aus dem Verlauf der vom Fahrer vorgegebenen Lenkeingabegröße und/oder aus mindestens einer Fahrzustandsgröße ein vom Fahrer durchgeführtes Fahrmanöver identifiziert, beispielsweise eine Kurvenfahrt, ein Ausweichverhalten oder eine Geradeausfahrt. Das Fahrerbewertungssignal kann aus der Abweichung der tatsächlichen Lenkeingabegröße von einer idealen, dem Fahrmanöver zugeordneten Lenkeingabegröße bestimmt werden. Zum Beispiel wird ein unerfahrener oder vorsichtiger Fahrer bei Kurvenfahrt eine größere Schwankungsbreite im Lenkwinkel um den idealen Lenkwinkelverlauf aufweisen als ein erfahrener Fahrer. Die Identifizierung des aktuell gefahrenen Fahrmanövers ermöglicht die Zuordnung einer idealen, dem betreffenden Fahrmanöver zugeordneten Soll-Lenkeingabegröße, die dem Vergleich mit der tatsächlichen Ist-Lenkeingabegröße des Fahrers zugrunde gelegt wird. Dies ermöglicht mit hoher Genauigkeit die Zuordnung des Fahrers zu einer bestimmten Fahrerkategorie.

Die Lenkeingabegröße, die vom Fahrer vorgegeben wird, kann mithilfe eines Sensors erfasst werden. Als Lenkeingabegröße kommt beispielsweise das Lenkmoment des Fahrers in Betracht, das sensorisch ermittelt wird, oder der Lenkwinkel des Fahrers, der ebenfalls sensorisch ermittelt werden kann.

Gemäß noch einer weiteren vorteilhaften Ausführung wird das Fahrerbewertungssignal aus dem Zeitverlauf der Lenkeingabegröße bestimmt. Die Lenkeingabegröße wird aus den Sensorsignalen als Zeitreihe erfasst, insbesondere zu diskreten, konstant auseinanderliegenden Zeitpunkten. Aus diesem Zeitverlauf lassen sich typische Kenngrößen ermitteln, die Rückschlüsse auf die Einstufung des Fahrers in eine vorgegebene Fahrerkategorie erlauben.

Zusätzlich oder alternativ kann der Zeitverlauf der Lenkeingabegröße einer Frequenzanalyse unterzogen werden. Das Fahrerbewertungssignal wird in diesem Fall aus einer Analyse im Frequenzbereich bestimmt.

Ein weiterer Aspekt der Erfindung bezieht sich auf das vorbeschriebene Verfahren zur Klassifizierung eines Fahrers in einem Fahrzeug und außerdem auf die Verwertung des Fahrerbewertungssignals. Dieses kann zur Ansteuerung einer Funktionseinheit genutzt werden, die sich vorzugsweise innerhalb des Fahrzeugs befindet, gegebenenfalls aber auch außerhalb des Fahrzeugs liegen kann.

Bei der Funktionseinheit, der das Fahrerbewertungssignal zugeführt wird, handelt es sich beispielsweise um ein Fahrerassistenzsystem im Fahrzeug, das über das Fahrerbewertungssignal eingestellt wird. Das Fahrerassistenzsystem im Fahrzeug ist beispielsweise eine Motorsteuerung, eine Fahrwerkseinstellungseinheit, ein Antiblockiersystem oder eine Stabilitätskontrolleinheit.

Gemäß einer weiteren vorteilhaften Ausführung handelt es sich bei der Funktionseinheit um eine Anzeigeeinheit im Fahrzeug, auf der das Fahrerbewertungssignal zur Anzeige gebracht wird. Der Fahrer erhält eine unmittelbare Rückmeldung über sein Fahrverhalten und kann seine Fahrweise entsprechend anpassen. Gegebenenfalls können in der Anzeigeeinheit Hinweise für die Ausführung vorausliegender Fahrmanöver gegeben werden, beispielsweise für eine vorausliegende Kurvenfahrt, indem eine Empfehlung zur Anpassung der Geschwindigkeit oder dergleichen gegeben wird. Möglich ist es auch, Hinweise zur Vermeidung von vorausliegenden Strecken zu geben. Des Weiteren kann es vorteilhaft sein, in der Anzeigeeinheit eine Soll-Fahrlinie vorzugeben, der der Fahrer folgen soll, wobei in der Anzeigeeinheit die tatsächliche Fahrzeugposition in Bezug auf die Soll-Fahrlinie angezeigt wird.

Gemäß einer weiteren vorteilhaften Ausführung befindet sich die Funktionseinheit außerhalb des Fahrzeugs, auf die das Fahrerbewertungssignal zur weiteren Verwertung übertragen wird. Die Funktionseinheit kann beispielsweise als eine Zentralstelle ausgeführt sein, in der Rückmeldungen von einem oder mehreren Fahrzeugen aufgenommen werden und in der die Fahrerbewertungssignale ausgewertet werden. Dies erlaubt zum einen eine individuelle Bewertung der Fahrerfähigkeiten und zum andern eine Aussage über die befahrene Strecke, beispielsweise den Straßenzustand, wobei von der Zentralstelle an das Fahrzeug oder an weitere Fahrzeuge entsprechende Informationen mit Hinweisen für das Fahrverhalten übertragen werden können.

Die Erfindung bezieht sich außerdem auf ein Steuergerät, das Mittel enthält, die zur Durchführung des vorbeschriebenen Verfahrens ausgestaltet sind. Die Mittel umfassen mindestens eine Speichereinheit, mindestens eine Recheneinheit, einen Steuergeräteeingang und einen Steuergeräteausgang. In dem Steuergerät, das sich im Fahrzeug befindet, kann das Fahrerbewertungssignal auf der Grundlage der sensorisch erfassten Lenkeingabegrößen bestimmt werden. Außerdem können in diesem Steuergerät oder gegebenenfalls in einem weiteren Steuergerät im Fahrzeug Signale zur Ansteuerung einer Funktionseinheit im Fahrzeug erzeugt werden, beispielsweise eine Anzeigeeinheit oder ein Fahrerassistenzsystems wie zum Beispiel eine Motorsteuerung oder eine Fahrwerkssteuerung.

Die Erfindung bezieht sich des Weiteren auf ein Computerprogrammprodukt mit einem Programmcode, der dazu ausgelegt ist, die vorbeschriebenen Verfahrensschritte auszuführen. Das Computerprogrammprodukt läuft in dem vorbeschriebenen Steuergerät oder in mehreren Steuergeräten ab.

Die Erfindung bezieht sich außerdem auf ein Fahrzeug, insbesondere ein Einspurfahrzeug, das mit einer Sensorik zur Erfassung der vom Fahrer vorgegebenen Lenkeingabegröße ausgestattet ist und außerdem ein Steuergerät zur Bestimmung des Fahrerbewertungssignals und gegebenenfalls ein oder mehrere Steuergeräte zur Ansteuerung einer oder mehrerer Funktionseinheiten im Fahrzeug aufweist.

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht eines Motorrades, das mit einem Steuergerät ausgestattet ist, in welchem ein Fahrerbewertungssignal auf der Grundlage sensorisch erfasster Lenkeingabegrößen bestimmt wird,
- Fig. 2: ein Ablaufdiagramm mit Verfahrensschritten zur Bestimmung eines Fahrerbewertungssignals.

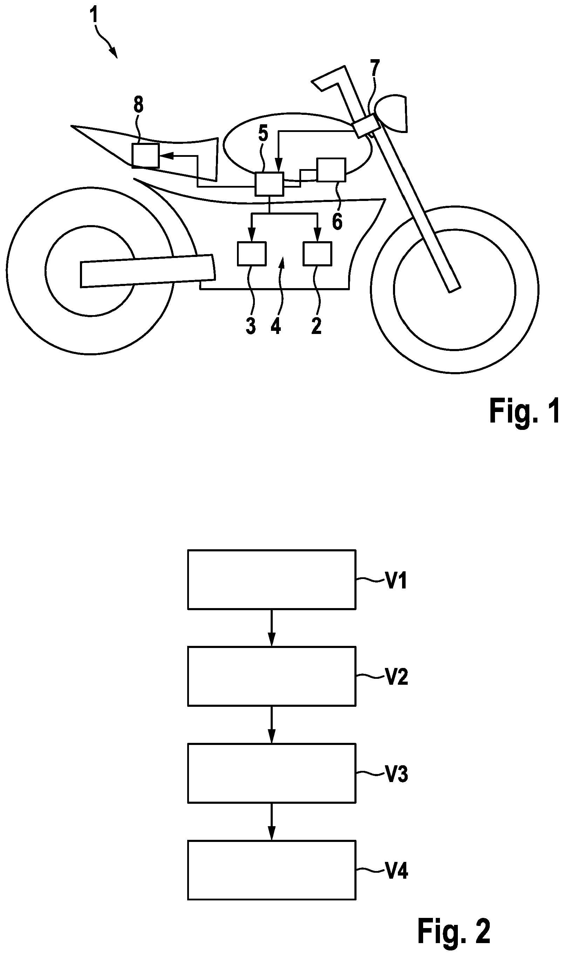

In Fig. 1 ist ein als Motorrad 1 ausgeführtes Einspurfahrzeug schematisch dargestellt. Das Motorrad 1 weist ein Motorsteuergerät 2 und ein Fahrerassistenzsystem 3 in Form einer Stabilitätskontrolle auf sowie einen Antriebsmotor 4, der von dem Motorsteuergerät 2 angesteuert wird. Das Fahrerassistenzsystem 3 und das Motorsteuergerät 2 kommunizieren miteinander. Der Antriebsmotor 4 ist als Verbrennungsmotor, als Elektromotor oder als Hybridmotor mit Verbrennungsmotor und Elektromotor ausgeführt.

Das Motorrad 1 ist mit einem weiteren Steuergerät 5 ausgestattet, in welchem eine Verarbeitung von Sensorsignalen aus einer Sensorik im Motorrad 1 durchgeführt wird. Außerdem steht das Steuergerät 5 in Kommunikationsverbindung mit dem Motorsteuergerät 2 und dem Fahrerassistenzsystem 3. Das Steuergerät 5 empfängt Sensorsignale von einer Inertialmesseinheit 6, in der Beschleunigungen und Drehraten des Motorrades 1 erfasst werden, und Sensorsignale eines Lenkmomentsensors 7, über den das vom Fahrer auf den Lenker aufgebrachte Lenkmoment ermittelbar ist. Das Steuergerät 5 kommuniziert außerdem mit einer Sende-/Empfangseinheit 8, über die Signale, welche vom Steuergerät 5 stammen, ausgesandt werden können, insbesondere zu einer außerhalb des Motorrads 1 liegenden Funktionseinheit wie beispielsweise einer Zentralstelle zur Überwachung und Auswertung der vom Motorrad 1 stammenden Informationen.

Das Steuergerät 5 dient insbesondere dazu, ein Fahrerbewertungssignal zu ermitteln, mit dem der Fahrer in eine definierte Fahrerkategorie eingestuft wird. Diese Einstufung erfolgt auf der Basis von analysierten Lenkeingabegrößen, die im vorliegenden Fall mithilfe des Lenkmomentsensors 7 in Form des vom Fahrer vorgegebenen Lenkmoments erfasst werden. Das Fahrerbewertungssignal, das auf der Basis der Lenkeingabegrößen bestimmt wird, stuft den Fahrer in eine bestimmte Fahrerkategorie ein, wobei das Fahrerbewertungssignal beispielsweise dem Motorsteuergerät 2 und dem Fahrerassistenzsystem 3 zur Einstellung von Parametern zugeführt werden kann. Über die Sende-/Empfangseinheit 8 kann das Fahrerbewertungssignal auch an die außerhalb des Motorrads gelegene Funktionseinheit übertragen werden. Außerdem ist es möglich, das Fahrerbewertungssignal über eine Anzeigeeinheit dem Fahrer zur Anzeige zu bringen, so dass dieser auf der Grundlage des Fahrerbewertungssignals sein Fahrverhalten anpassen kann.

In Fig. 2 ist ein Ablaufdiagramm mit Verfahrensschritten zur Bestimmung des Fahrerbewertungssignals dargestellt. Im Verfahrensschritt V1 werden Signale der Sensorik im Fahrzeug fortlaufend ermittelt, insbesondere Sensorsignale der Inertialmesseinheit 6 und des Lenkmomentsensors 7. Die Signale werden dem Steuergerät 5 zugeführt.

Im nächsten Verfahrensschritt V2 wird auf der Grundlage der Sensorsignale das aktuelle Fahrmanöver bestimmt, das mit dem Fahrzeug durchgeführt wird. Hierzu werden Sensorsignale aus einem Mindestzeitraum ausgewertet, der es erlaubt, das aktuelle Fahrmanöver zu bestimmen. Es kann beispielsweise zweckmäßig sein, zunächst Sensorsignale über einen Zeitraum von 0.5 s oder 1 s aufzunehmen und die Signale dieses Zeitraums der Bestimmung des aktuellen Fahrmanövers zugrunde zu legen. Nachdem das Fahrmanöver bestimmt worden ist, beispielsweise eine Geradeausfahrt, eine Kurvenfahrt oder ein Ausweichmanöver, kann dem Fahrmanöver eine Soll-Lenkeingabegröße zugeordnet werden, die einem Optimierungskriterium folgen kann, beispielsweise einer Minimierung von Querbeschleunigungen.

Im folgenden Verfahrensschritt V3 wird die Abweichung der mit dem Lenkmomentsensor 7 ermittelten Ist-Lenkeingabegröße von der im Verfahrensschritt V2 bestimmten Soll-Lenkeingabegröße bestimmt. Aus dieser Abweichung wird das Fahrerbewertungssignal bestimmt, mit dem der Fahrer in eine bestimmte Fahrkategorie eingestuft wird, beispielsweise in eine der Kategorien vorsichtiger Fahrer/durchschnittlicher Fahrer/sportlicher Fahrer.

Bei der Bestimmung der Abweichung zwischen Ist- und Soll-Lenkeingabegröße kann insbesondere die Abweichung mit höherer Frequenz und kleinerer Amplitude betrachtet werden, die auf Lenkkorrekturen des Fahrers hinweisen.

Bei der Analyse der Lenkeingabegröße im Verfahrensschritt 3 ist sowohl eine Betrachtung des Zeitverlaufs der Lenkeingabegröße möglich als auch eine Transformation des Zeitverlaufs in den Frequenzbereich und entsprechend eine Frequenzanalyse.

Nach der Bestimmung des Fahrerbewertungssignals kann im folgenden Verfahrensschritt V4 zur Ansteuerung eine Funktionseinheit herangezogen werden. Die Funktionseinheit kann sich innerhalb oder außerhalb des Motorrades befinden. Innerhalb des Motorrades handelt es sich bei der Funktionseinheit beispielsweise um das Motorsteuergerät oder das Fahrerassistenzsystem. In Betracht kommt auch eine Anzeigeeinheit zur Darstellung des Fahrerbewertungssignals als Information für den Fahrer.

Außerhalb des Motorrades handelt es sich beispielsweise um eine Zentralstelle, an die das Fahrerbewertungssignal zur weiteren Auswertung übermittelt wird.

## Patentansprüche

1. Verfahren zur Klassifizierung eines Fahrers in einem Fahrzeug, insbesondere in einem Einspurfahrzeug (1), bei dem während der Fahrt eine vom Fahrer vorgegebene Lenkeingabegröße über einen Mindestzeitraum ermittelt und aus dem Verlauf der Lenkeingabegröße ein Fahrerbewertungssignal bestimmt wird, das einer Einstufung des Fahrers in eine vorgegebene Fahrerkategorie entspricht, **dadurch gekennzeichnet, dass** aus dem Verlauf der vom Fahrer vorgegebenen Lenkeingabegröße und/oder aus mindestens einer Fahrzustandsgröße ein vom Fahrer durchgeführtes Fahrmanöver identifiziert wird, wobei das Fahrerbewertungssignal aus der Abweichung der tatsächlichen Lenkeingabegröße von einer idealen, dem Fahrmanöver zugeordneten Lenkeingabegröße bestimmt wird.

2. Verfahren nach Anspruch 1, **dadurch gekennzeichnet, dass** als Lenkeingabegröße das Lenkmoment des Fahrers herangezogen wird.

3. Verfahren nach Anspruch 1, **dadurch gekennzeichnet, dass** als Lenkeingabegröße der Lenkwinkel des Fahrers herangezogen wird.

4. Verfahren nach einem der Ansprüche 1 bis 3, **dadurch gekennzeichnet, dass** das Fahrerbewertungssignal aus einem Zeitverlauf der Lenkeingabegröße bestimmt wird.

5. Verfahren nach einem der Ansprüche 1 bis 4, **dadurch gekennzeichnet, dass** der Zeitverlauf der Lenkeingabegröße einer Frequenzanalyse unterzogen wird, aus der das Fahrerbewertungssignal bestimmt wird.

6. Verfahren zur Klassifizierung eines Fahrers in einem Fahrzeug nach einem der Ansprüche 1 bis 5 und zur Verwertung des Fahrerbewertungssignals, das zur Ansteuerung einer Funktionseinheit innerhalb oder außerhalb des Fahrzeugs zugeführt wird.

7. Verfahren nach Anspruch 6, **dadurch gekennzeichnet, dass** die Funktionseinheit ein Fahrerassistenzsystem (3) im Fahrzeug ist, das über das Fahrerbewertungssignal eingestellt wird.

8. Verfahren nach Anspruch 6 oder 7, **dadurch gekennzeichnet, dass** die Funktionseinheit eine Anzeigeeinheit im Fahrzeug ist, auf der das Fahrerbewertungssignal zur Anzeige gebracht wird.

9. Verfahren nach einem der Ansprüche 6 bis 8, **dadurch gekennzeichnet, dass** die Funktionseinheit außerhalb des Fahrzeugs angeordnet ist, auf die das Fahrerbewertungssignal zur weiteren Verwertung übertragen wird.

10. Steuergerät (5) oder Kombination von Steuergeräten (5), enthaltend Mittel, die zur Durchführung des Verfahrens nach einem oder mehreren der vorhergehenden Ansprüche ausgestaltet sind.

11. Fahrzeug, insbesondere Einspurfahrzeug (1), mit einer Sensorik zur Erfassung einer vom Fahrer vorgegebenen Lenkeingabegröße und mit einem Steuergerät (5) oder einer Kombination von Steuergeräten (5) gemäß Anspruch 10.

12. Computerprogrammprodukt mit einem Programmcode, der dazu ausgelegt ist, Schritte des Verfahrens nach einem der Ansprüche 1 bis 9 auszuführen, wenn das Computerprogrammprodukt in einem Steuergerät (5) oder einer Kombination von Steuergeräten (5) gemäß Anspruch 10 abläuft.

## Claims

1. Method for classifying a driver in a vehicle, in particular in a single-track vehicle (1), in which a steering input variable specified by the driver is ascertained over a minimum period of time during driving and a driver evaluation signal is determined from the course of the steering input variable, the driver evaluation signal corresponding to a classification of the driver into a specified driver category, **characterized in that** a driving manoeuvre carried out by the driver is identified from the course of the steering input variable specified by the driver and/or from at least one driving state variable, wherein the driver evaluation signal is determined from the deviation in the actual steering input variable from an ideal steering input variable associated with the driving manoeuvre.

2. Method according to Claim 1, **characterized in that** the steering torque produced by the driver is used as the steering input variable.

3. Method according to Claim 1, **characterized in that** the steering angle produced by the driver is used as the steering input variable.

4. Method according to any of Claims 1 to 3, **characterized in that** the driver evaluation signal is determined from a variation in the steering input variable over time.

5. Method according to any of Claims 1 to 4, **characterized in that** the variation in the steering input variable over time is subjected to a frequency analysis, the driver evaluation signal being determined from the frequency analysis.

6. Method for classifying a driver in a vehicle according to any of Claims 1 to 5 and for utilizing the driver evaluation signal, which is supplied for actuating a functional unit inside or outside the vehicle.

7. Method according to Claim 6, **characterized in that** the functional unit is a driver assistance system (3) in the vehicle, the driver assistance system being adjusted via the driver evaluation signal.

8. Method according to Claim 6 or 7, **characterized in that** the functional unit is a display unit in the vehicle, the driver evaluation signal being displayed on the display unit.

9. Method according to any of Claims 6 to 8, **characterized in that** the functional unit is arranged outside the vehicle, the driver evaluation signal being transmitted to the functional unit for further utilization.

10. Control device (5) or combination of control devices (5), containing means which are designed for carrying out the method according to one or more of the preceding claims.

11. Vehicle, in particular single-track vehicle (1), having a sensor system for detecting a steering input variable specified by the driver and having a control device (5) or a combination of control devices (5) according to Claim 10.

12. Computer program product containing program code which is designed to execute steps of the method according to any of Claims 1 to 9 when the computer program product runs in a control device (5) or a combination of control devices (5) according to Claim 10.

## Revendications

1. Procédé permettant de classifier un conducteur dans un véhicule, en particulier un véhicule à voie unique (1), dans lequel pendant la conduite, une grandeur d'entrée de braquage spécifiée par le conducteur est établie pendant une période minimale, et à partir de l'allure de la grandeur d'entrée de braquage est déterminé un signal d'évaluation du conducteur qui correspond à un classement du conducteur dans une catégorie de conducteur prédéfinie, **caractérisé en ce qu'**une manœuvre de conduite effectuée par le conducteur est identifiée à partir de l'allure de la grandeur d'entrée de braquage spécifiée par le conducteur et/ou à partir d'au moins une grandeur d'état de conduite, dans lequel le signal d'évaluation est déterminé à partir de l'écart de la grandeur d'entrée de braquage réelle par rapport à une grandeur d'entrée de braquage associée à la manœuvre de conduite.

2. Procédé selon la revendication 1, **caractérisé en ce que** le couple de braquage du conducteur est utilisé comme grandeur d'entrée de braquage.

3. Procédé selon la revendication 1, **caractérisé en ce que** l'angle de braquage du conducteur est utilisé comme grandeur d'entrée de braquage.

4. Procédé selon l'une quelconque des revendications 1 à 3, **caractérisé en ce que** le signal d'évaluation du conducteur est déterminé à partir d'une évolution dans le temps de la grandeur d'entrée de braquage.

5. Procédé selon l'une quelconque des revendications 1 à 4, **caractérisé en ce que** l'évolution dans le temps de la grandeur d'entrée de braquage est soumise à une analyse de fréquence à partir de laquelle le signal d'évaluation du conducteur est déterminé.

6. Procédé permettant de classifier un conducteur dans un véhicule selon l'une quelconque des revendications 1 à 5 et d'exploiter le signal d'évaluation du conducteur qui est amené pour le pilotage d'une unité fonctionnelle à l'intérieur ou à l'extérieur du véhicule.

7. Procédé selon la revendication 6, **caractérisé en ce que** l'unité fonctionnelle est un système d'assistance au conducteur (3) dans le véhicule qui est réglé par l'intermédiaire du signal d'évaluation du conducteur.

8. Procédé selon la revendication 6 ou 7, **caractérisé en ce que** l'unité fonctionnelle est une unité d'affichage dans le véhicule sur laquelle le signal d'évaluation du conducteur est affiché.

9. Procédé selon l'une quelconque des revendications 6 à 8, **caractérisé en ce que** l'unité fonctionnelle à laquelle est transmis le signal d'évaluation du conducteur est disposée à l'extérieur du véhicule.

10. Appareil de commande (5) ou combinaison d'appareils de commande (5), comportant des moyens qui sont configurés pour exécuter le procédé selon une ou plusieurs des revendications précédentes.

11. Véhicule, en particulier véhicule à voie unique (1), comprenant un système de capteurs pour détecter une grandeur d'entrée de braquage spécifiée par le conducteur, et un appareil de commande (5) ou une combinaison d'appareils de commande (5) selon la revendication 10.

12. Produit de programme informatique comprenant du code programme qui est conçu pour exécuter des étapes du procédé selon l'une quelconque des revendications 1 à 9 lorsque le produit de programme informatique est exécuté dans un appareil de commande (5) ou une combinaison d'appareils de commande (5) selon la revendication 10.
